# EUROPEAN PATENT APPLICATION

(11) **EP 4 443 146 A1**
(43) Date of publication of application: **09.10.2024**
(21) Application number: 22898304.5
(22) Date of filing: 26.10.2022
(51) Int. Cl.: G01N 23/04, G01N 23/18, G06N 3/04, G06N 3/08, G06N 20/00, G06T 7/00

(54) **TRAINING DATA GENERATION DEVICE, TRAINING DATA GENERATION METHOD, PROGRAM, AND DEFECT INSPECTION DEVICE**

(30) Priority: 29.11.2021 JP 2021193104
(71) Applicant: FUJIFILM Corporation, Tokyo 106-8620 (JP)
(72) Inventor: IKEDA, Haruka, Tokyo 106-8620 (JP)
(74) Representative: Meissner Bolte Partnerschaft mbB
(86) International application number: PCT/JP2022/039841
(87) International publication number: WO 2023/095520

(57) **Abstract**

Provided are a training data generation device, a training data generation method, a program, and a defect test device that are less likely to be affected by a size of a detection target. A training data generation device includes a processor, in which the processor extracts a region of 2 px or more including a defective pixel that is a detection target, as a region of interest, for a test target image including a test target, and extracts a patch image having a patch size and including the region of interest, as training data.

## Description

### BACKGROUND OF THE INVENTION

### 1. Field of the Invention

The present invention relates to a training data generation device, a training data generation method, a program, and a defect test device.

### 2. Description of the Related Art

In non-destructive test of an industrial product using an X-ray transmission image or the like, defects such as air bubbles, foreign substances, and fissuring generated in a product that is a test target are detected by visually observing an image of the product obtained by transmission imaging, and whether the product is good or defective is determined.

In recent years, it has been considered to use a learning model trained through machine learning to determine whether the product is good or defective. In a case of performing the machine learning, training data is extracted from the test target image, and the learning model is trained through the machine learning by using the extracted training data.

In such machine learning, for example, a technique of adjusting the number of data of each type to be detected, in order to improve the recognition accuracy is applied (JP2021-047826A).

### SUMMARY OF THE INVENTION

Meanwhile, in the extraction of the training data from the test target image, in a case in which the training data is extracted with each pixel that is the defect of the detection target as a starting point, the number of extracted training data increases as the size of the defect increases. Even for the defects belonging to the same type, the imbalance occurs in the training data, and the learning of the minute defect is relatively delayed, which causes the detection rate not to be improved.

The present invention has been made in view of such circumstances, and an object of the present invention is to provide a training data generation device, a training data generation method, a program, and a defect test device which are less affected by a size of a test target.

A first aspect relates to a training data generation device comprising: a processor, in which the processor extracts a region of 2 px or more including a defective pixel that is a detection target, as a region of interest, for a test target image including a test target, and extracts a patch image having a patch size and including the region of interest, as training data.

A second aspect relates to the training data generation device, in which the region of interest is a pixel region acquired in accordance with a specific rule, and is a region in which it is determined that the defective pixel that is the detection target is included as a result of determining whether or not the defective pixel corresponding to a defect is included for each of the pixel regions.

A third aspect relates to the training data generation device, in which the specific rule is to scan the test target image in a random order or an exhaustive order and acquire a pixel range having a fixed size.

A fourth aspect relates to the training data generation device, in which, in the specific rule, a range of the detection target is limited to a part of the test target image in advance, scanning is performed in a random order or an exhaustive order within the range, and a pixel range having a fixed size is acquired.

A fifth aspect relates to the training data generation device, in which the processor extracts a patch image having a patch size and including a pixel to be distinguished from the detection target, as the training data, for the test target image.

A sixth aspect relates to the training data generation device, in which the region of interest is determined by specifying one detection target including a pixel of the detection target, and acquiring a certain number of pixel regions including the pixel of the detection target.

A seventh aspect relates to the training data generation device, in which the patch size is a size determined by an input of a machine learning device that generates a learning model using the training data.

An eighth aspect relates to the training data generation device, in which a size of the region of interest is determined based on a size of a defect of the detection target or a distance between the defects.

A ninth aspect relates to the training data generation device, in which the processor determines whether or not each region of interest includes the defective pixel based on ground truth data based on the test target image.

A tenth aspect relates to the training data generation device, in which a distance between the regions of interest adjacent to each other is equal to or smaller than the patch size.

An eleventh aspect relates to the training data generation device, in which, in a case in which the processor determines whether or not each region of interest includes the defective pixel, the processor performs the determination for each type of a defect.

A twelfth aspect relates to the training data generation device, in which the processor adjusts the number of the training data for each type of the defect.

A thirteenth aspect relates to the training data generation device, in which the test target image is an X-ray transmission image.

A fourteenth aspect relates to the training data generation device, in which the test target image is an X-ray transmission image of a cast metal component, a forged metal component, or a welded metal component.

A fifteenth aspect relates to a training data generation method executed by a training data generation device including a processor, the training data generation method comprising: a step of extracting a region of 2 px or more including a defective pixel that is a detection target, as a region of interest, for a test target image including a test target; and a step of extracting a patch image having a patch size and including the region of interest, as training data.

A sixteenth aspect relates to a program causing a training data generation device including a processor to execute a training data generation method comprising: a step of extracting a region of 2 px or more including a defective pixel that is a detection target, as a region of interest, for a test target image including a test target; and a step of extracting a patch image having a patch size and including the region of interest, as training data.

A seventeenth aspect relates to a defect test device comprising: the training data generation device described above; a test target image acquisition unit that acquires the test target image; and a defect test unit that performs learning using the training data generated by the training data generation device and detects a defect in the test target image.

The training data generation device, the training data generation method, the program, and the defect test device according to the aspects of the present invention enable the generation of the training data that is less likely to be affected by the size of the detection target, and the suppression of the decrease in the defect detection rate.

### BRIEF DESCRIPTION OF THE DRAWINGS

Fig. 1 is a block diagram showing a defect test system.
Fig. 2 is a block diagram showing an example of a hardware configuration of a training data generation device.
Fig. 3 is a block diagram showing a processing function realized by a CPU.
Fig. 4 is a block diagram showing an example of a machine learning device.
Fig. 5 is a flowchart showing a training data generation method using the training data generation device according to a first embodiment.
Fig. 6 is a diagram showing an image acquisition step.
Figs. 7A to 7C are diagrams showing a region-of-interest extraction step.
Figs. 8A to 8C are diagrams showing a defective pixel determination step.
Figs. 9A and 9B are diagrams showing a training data extraction step.
Fig. 10 is a diagram showing a modification example of the first embodiment.
Figs. 11A and 11B are diagrams showing a region extraction step, a defective pixel determination step, and a training data extraction step according to a second embodiment.
Figs. 12A and 12B are diagrams showing a region extraction step, a defective pixel determination step, and a training data extraction step according to a third embodiment.
Figs. 13A to 13C are diagrams showing the defective pixel determination step in a case in which a plurality of types of defects are included.
Fig. 14 is a diagram showing the training data extraction step in cases of Figs. 13A to 13C.
Fig. 15 is a block diagram showing a configuration of a defect test device.
Fig. 16 is a block diagram showing a configuration example of an imaging system.
Fig. 17 is a diagram conceptually showing average sizes of Gas, FMLD, and FMMD.

### DESCRIPTION OF THE PREFERRED EMBODIMENTS

Hereinafter, embodiments of a training data generation device, a training data generation method, a program, and a defect test device according to an embodiment of the present invention will be described with reference to the accompanying drawings.

### [Configuration example of defect test system]

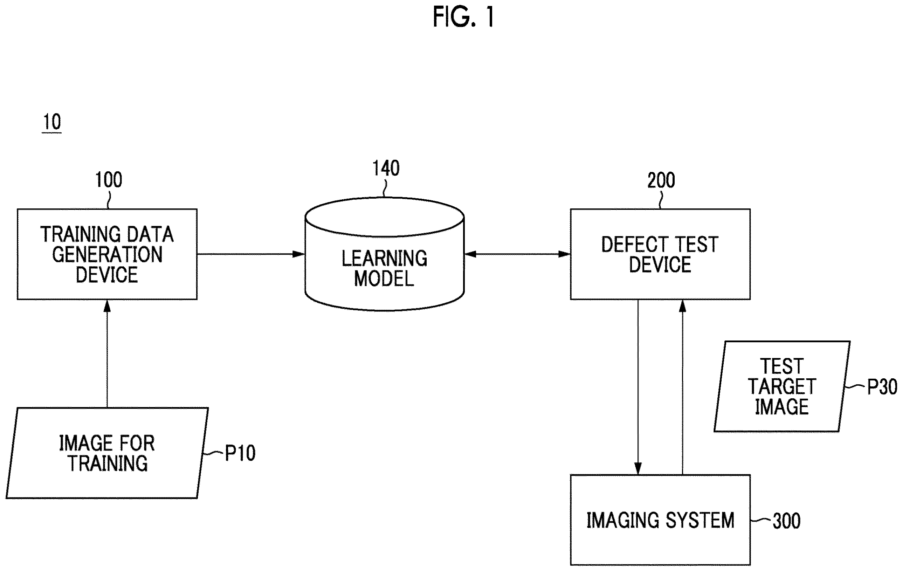

Fig. 1 is a block diagram showing a defect test system.

As shown in Fig. 1, a defect test system 10 performs, for example, a defect test with machine learning on a test target (hereinafter, also referred to as a test object), such as an industrial product, and comprises a training data generation device 100 and a defect test device 200.

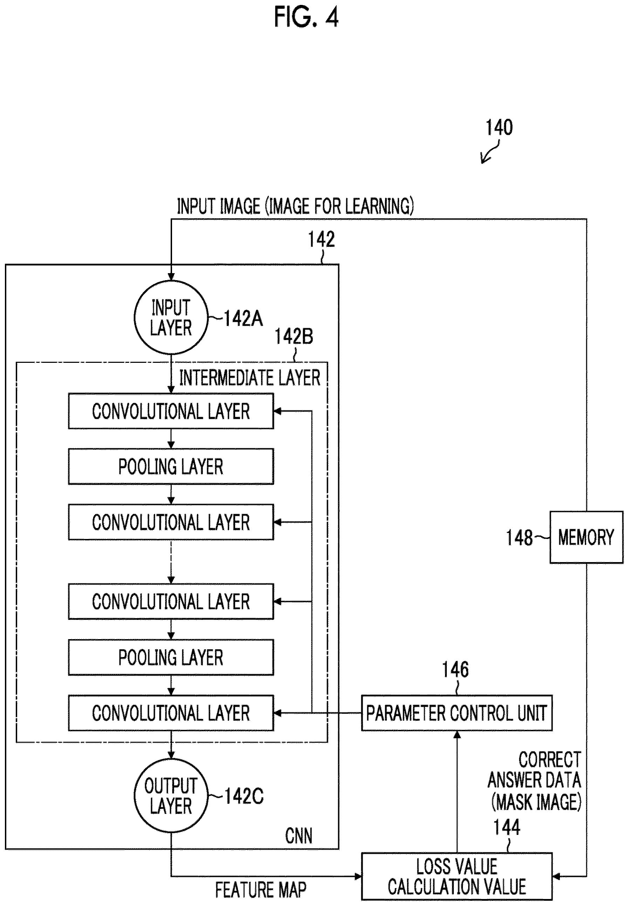

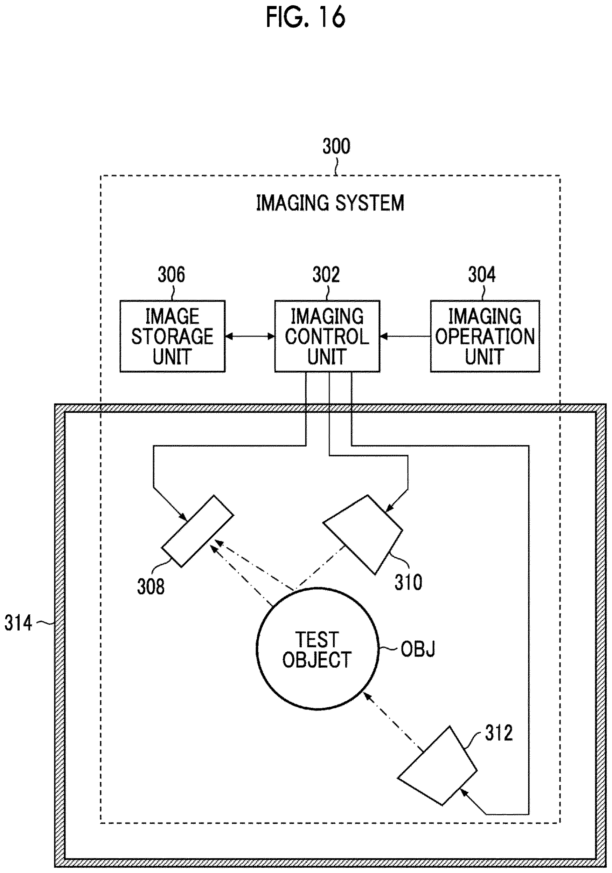

The training data generation device 100 receives the input of an image for training P10, which is a test target image obtained by imaging the test target, and generates training data to be used to train a machine learning device 140 (see Fig. 4) based on the image for training P10. Here, the image for training P10 is an image including a sample of a defect that is a detection target, and is an image obtained by imaging the industrial product or the like that is the test object OBJ (see Fig. 16) to be tested by the defect test device 200. The image for training P10 may be an image obtained by imaging the test object in which the defect naturally occurs during the use of the test object, or may be an image obtained by imaging the test object to which the defect is artificially added. As the image for training P10, for example, a sample provided from a designer or an administrator of a facility to which the test object is attached can be used. The image for training P10 is, for example, an X-ray transmission image. In addition, the X-ray transmission image is, for example, an X-ray transmission image of a cast metal component, a forged metal component, or a welded metal component.

A learning model trained by the machine learning device 140 is used in the defect test device 200. It is possible to incorporate the learning model into the defect test device 200. The defect test device 200 can use the incorporated learning model. It is possible to incorporate the learning model into a server on a network connected to the defect test device 200. The defect test device 200 can use the learning model of the server via the network. The defect test device 200 can use a learning model trained for each industrial product that is the test target.

### <Configuration of training data generation device>

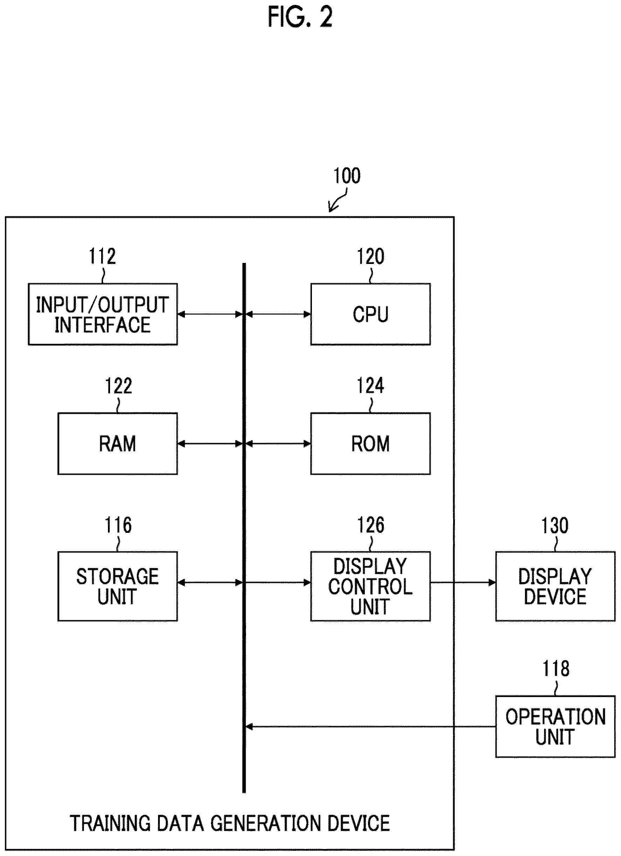

Hereinafter, the training data generation device 100 according to the embodiment will be described with reference to Fig. 2. Fig. 2 is a block diagram showing an example of a hardware configuration of the training data generation device 100 according to the embodiment of the present invention.

As the training data generation device 100 shown in Fig. 2, a computer or a workstation can be used. The training data generation device 100 according to the present example is mainly configured by an input/output interface 112, a storage unit 116, an operation unit 118, a central processing unit (CPU) 120, a random access memory (RAM) 122, a read only memory (ROM) 124, and a display control unit 126. A display device 130 constituting a display is connected to the training data generation device 100, and the display device 130 displays an image under the control of the display control unit 126 in response to a command of the CPU 120.

The input/output interface 112 can input various types of data (information) to the training data generation device 100. For example, the data stored in the storage unit 116 is input via the input/output interface 112. Further, the input/output interface 112 can perform communication with an external device via the network. As the method of transmitting and receiving data between the training data generation device 100 and the external device, wired communication or wireless communication (for example, a local area network (LAN), a wide area network (WAN), or the Internet connection) can be used.

The CPU (processor) 120 reads out various programs including a training data generation program according to the embodiment stored in the storage unit 116, the ROM 124, or the like, and loads the programs in the RAM 122 to perform calculations, thereby integrally controlling the respective units. The CPU 120 reads out the programs stored in the storage unit 116 or the ROM 124, performs the calculations by using the RAM 122, and performs various types of processing of the training data generation device 100. The CPU 120 receives an operation input from an operator via the operation unit 118, and transmits a control signal corresponding to the operation input to each unit of the training data generation device 100, to control the operation of each unit.

The storage unit (memory) 116 is a memory configured by a hard disk device, an embedded multi media card (eMMC), a solid state drive (SSD), a flash memory, and the like. The storage unit 116 stores the data and the programs for operating the training data generation device 100, such as an operating system and a program for executing a training data generation method. The storage unit 116 stores information and the like used in the following embodiments.

The operation unit 118 includes a keyboard and a mouse, and a user can cause the training data generation device 100 to perform necessary processing via these devices. The display device 130 may also function as an operation unit by using a touch panel type device.

The display device 130 is, for example, a device such as a liquid crystal display, and can display various types of information.

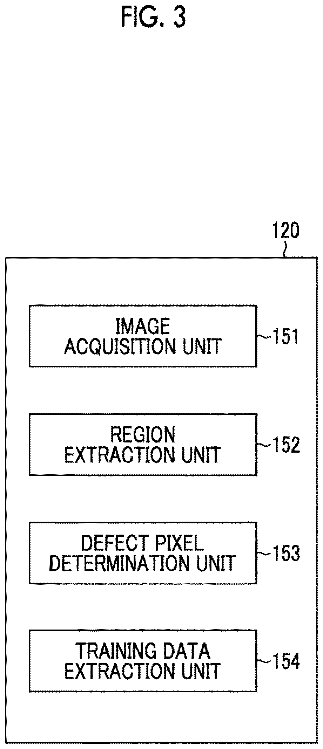

Fig. 3 is a diagram showing an example of a block diagram showing a processing function realized by the CPU 120.

The CPU 120 comprises an image acquisition unit 151, a region extraction unit 152, a defective pixel determination unit 153, a training data extraction unit 154, and the like. The image acquisition unit 151, the region extraction unit 152, the defective pixel determination unit 153, the training data extraction unit 154, and the like are a part of the CPU 120, and the CPU 120 executes processing of each unit.

The image acquisition unit 151 executes processing of acquiring the image for training P10 via the input/output interface 112. It should be noted that the method in which the image acquisition unit 151 acquires the image for training P10 can be, for example, acquisition via communication via the network. In addition, for example, a universal serial bus (USB) cable, Bluetooth (registered trademark), infrared communication, or the like may be used, the image for training P10 may be stored in a readable storage medium (for example, a memory card) attachable to and detachable from the training data generation device 100, and the image acquisition unit 151 may acquire the image for training P10 via the storage medium. In addition, the image for training P10 can be stored in the storage unit 116 of the training data generation device 100, and the image acquisition unit 151 can acquire the image for training P10 from the storage unit 116 via the input/output interface 112.

The region extraction unit 152 executes processing of extracting a plurality of regions from the image for training P10 acquired by the image acquisition unit 151. The region is a pixel region of 2 px or more. In the processing, the region may have a fixed size. The region extraction unit 152 extracts the plurality of regions by, for example, setting a virtual frame having a size corresponding to a region of interest described below, and cutting out an image (a part of the image for training P10) within the frame while scanning the image for training P10. The region extraction unit 152 can optionally set a slide width of the frame to be scanned and a scanning order, and this optional setting can be a specific rule. For example, the slide width of the frame is preferably equal to or smaller than a patch size described below, and as a result, a distance between a plurality of adjacent regions is preferably equal to or smaller than the patch size.

The defective pixel determination unit 153 determines whether or not each region of the plurality of regions extracted by the region extraction unit 152 includes even a part of a defective pixel corresponding to the defect. The defective pixel determination unit 153 extracts the region including even a part of the defective pixel as a region of interest. That is, the region of interest is a pixel region acquired by the region extraction unit 152 in accordance with the specific rule, and is a region in which it is determined that the defective pixel that is the detection target is included as a result of the determination via the defective pixel determination unit 153 of whether or not the defective pixel corresponding to the defect is included for each pixel region. The defective pixel determination unit 153 acquires information for extracting the region including even a part of the defective pixel as the region of interest. It is preferable that the defective pixel determination unit 153 acquires ground truth data corresponding to the image for training P10 in a case in which the defective pixel determination unit 153 determines whether or not the region includes the defective pixel corresponding to the defect. The ground truth data includes information such as positional information in units of one pixel (1 px) corresponding to the entire image (all pixels) of the image for training P10, the existence of a region of the defect, and a type of the defect.

The training data extraction unit 154 extracts, for example, a patch image having the patch size and including the defective pixel from the region of interest, as the training data, with reference to the ground truth data. The training data extraction unit 154 extracts one set including the patch image having the patch size extracted from the region of interest and the correct answer data, as the training data. The correct answer data is, for example, a mask image in which the region of the defect existing in the patch size is filled.

Fig. 4 is a block diagram showing an example of the machine learning device 140 that uses the training data.

The machine learning device 140 shown in Fig. 4 is configured by a learning model (a convolution neural network (CNN) 142 which is one of the learning models, a loss value calculation unit 144, and a parameter control unit 146.

The machine learning device 140 performs machine learning on the CNN 142 using the training data generated by the training data generation device 100. The training data generated by the training data generation device 100 is stored in, for example, a memory 148.

In a case in which the patch image having the patch size extracted from the region of interest is used as an input image, the CNN 142 is a portion that infers the region of the defect imaged in the input image, has a plurality of layer structures, and stores a plurality of weight parameters. The weight parameter is a filter coefficient of a filter called a kernel used in a convolution operation in a convolutional layer. Here, the patch size of the image extracted from the region of interest matches a patch size (for example, m × n: m, and n are integers) determined as the input to the machine learning device 140 in the neural network.

The CNN 142 can be changed from an untrained learning model to a trained learning model by updating the weight parameters from an initial value to an optimal value.

The CNN 142 comprises an input layer 142A, an intermediate layer 142B having a plurality of sets including a convolutional layer and a pooling layer, and an output layer 142C, and each layer has a structure in which a plurality of "nodes" are connected by "edges".

An image for learning, which is a learning target, is input to the input layer 142A as the input image. The image for learning is the patch image of the patch size in the training data (pair of the patch image having the patch size and the correct answer data) stored in the memory 148.

The intermediate layer 142B is a portion that has a plurality of sets of one set including the convolutional layer and the pooling layer, and extracts a feature from the image input from the input layer 142A. The convolutional layer acquires a "feature map" by performing filter processing (performing the convolution operation using the filter) on a nearby node in the previous layer. The pooling layer reduces the feature map output from the convolutional layer, to obtain a new feature map. The "convolutional layer" has a role of performing feature extraction such as edge extraction from the image, and the "pooling layer" has a role of giving robustness such that the extracted feature is not affected by translation or the like.

It should be noted that the intermediate layer 142B is not limited to a case in which one set including the convolutional layer and the pooling layer is provided, and may include a case in which the convolutional layers are continuous, activation processing via an activation function, or a normalization layer.

The output layer 142C is a portion that outputs the feature map indicating the feature extracted by the intermediate layer 142B. In addition, in the trained CNN 52, for example, the output layer 142C outputs an inference result of the region classification (segmentation) of defects in the input image, either pixel by pixel or a group of several pixels.

Any initial value is set for a coefficient or an offset value of the filter applied to each convolutional layer of the untrained CNN 142.

The loss value calculation unit 144 of the loss value calculation unit 144 and the parameter control unit 146, which function as the learning control unit, compares the feature map output from the output layer 142C of the CNN 142 with the mask image (correct answer data read out from the memory 148) which is the correct answer data for the input image (patch image having the patch size), and calculates an error (loss value which is a value of a loss function) between the feature map and the mask image. As the method of calculating the loss value, for example, softmax cross entropy, sigmoid, or the like may be used.

The parameter control unit 146 adjusts the weight parameters of the CNN 142 by an error back propagation method based on the loss value calculated by the loss value calculation unit 144. In the error back propagation method, the error is back propagated in order from the final layer, a stochastic gradient descent method is performed in each layer, and the parameters are updated repeatedly until the error converges.

This processing of adjusting the weight parameters is repeated, and the learning is repeated until a difference between the output of the CNN 142 and the correct answer data is small.

The machine learning device 140 is trained by repeating the machine learning using the learning data stored in the memory 148, to obtain a trained model of the CNN 142.

It should be noted that regions with convolutional neural networks (R-CNN) can be applied as the CNN 142. In the R-CNN, a bounding box having a changed size is slid in the captured image, to detect a region of the bounding box in which the defect is included. Then, the defect is detected by evaluating only the image part in the bounding box (extracting the CNN feature value). In addition, instead of the R-CNN, a faster R-CNN, a faster R-CNN, a mask R-CNN, and the like can be used.

The inference result of the learning model trained and configured in this way is used in the defect test device 200 as shown in Fig. 1.

### <First embodiment>

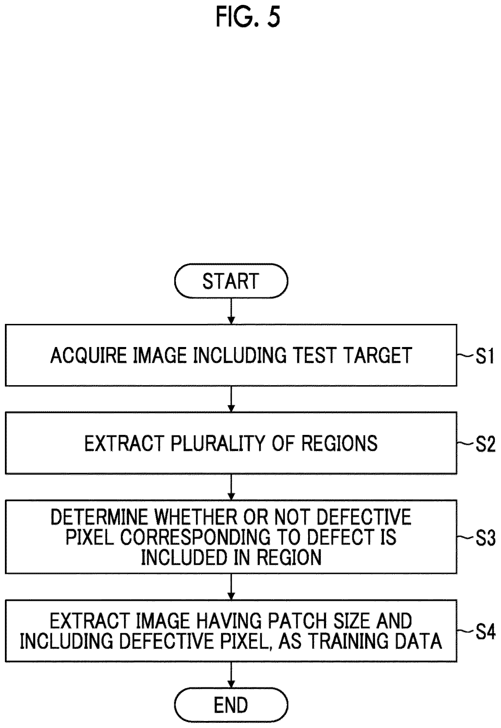

Hereinafter, a training data generation method according to the first embodiment using the training data generation device 100 will be described with reference to the flowchart of Fig. 5.

As shown in Fig. 5, the training data generation method comprises, as an example, a step (step S1) of acquiring the image including the test target, a step (step S2) of extracting the plurality of regions, a step (step S3) of determining whether or not the extracted region includes the defective pixel corresponding to the defect, and a step (step S4) of extracting the patch image having the patch size and including the defective pixel as the training data.

In step S1, the image including the test target is acquired. The image acquisition unit 151 of the CPU 120 acquires the image (image for training P10) including the test target (step S1).

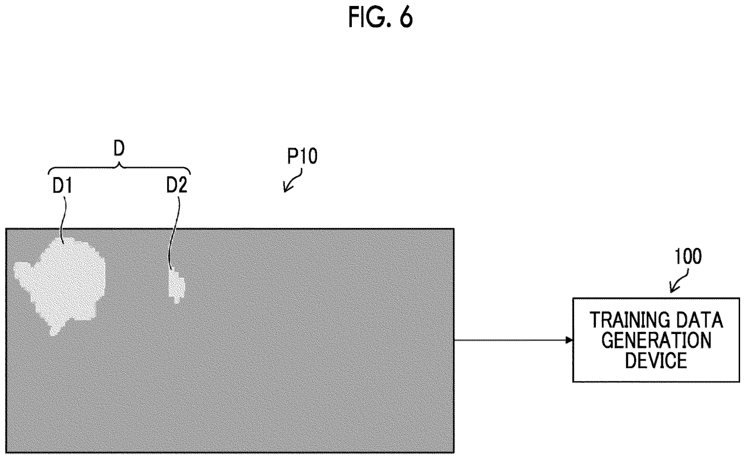

Fig. 6 is a diagram showing the image acquisition step (step S1). In the embodiment, as shown in Fig. 6, the image for training P10 includes a plurality of defects D, one of which is a defect D1 having a large size and the other of which is a defect D2 having a size smaller than the defect D1. As described above, the image for training P10 is, for example, the image obtained by imaging the test object in which the defect naturally occurs during use of the test obj ect.

In step S2, the plurality of regions are extracted from the image for training P10. The region extraction unit 152 of the CPU 120 extracts the plurality of regions (pixel regions of 2 px or more) from the image for training P10 (step S2).

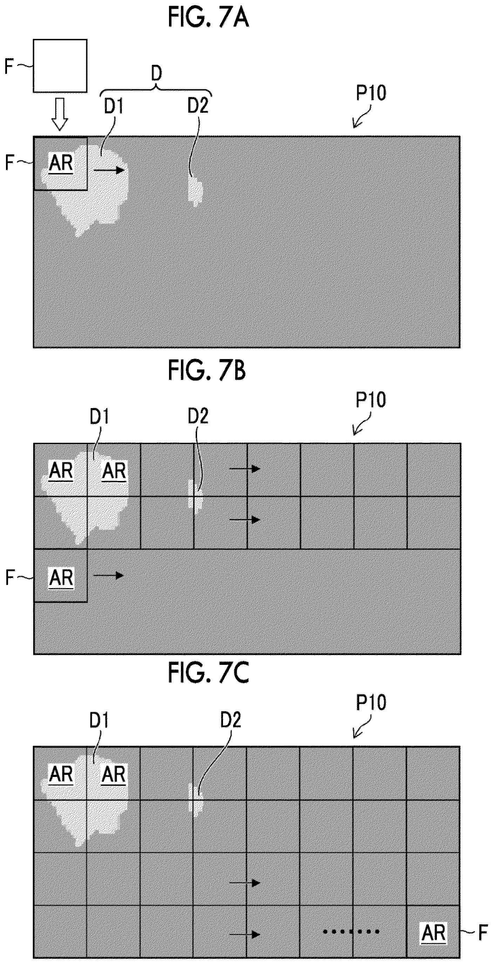

Figs. 7A to 7C are diagrams showing the region extraction step (step S2). As shown in Fig. 7A, the region extraction unit 152 sets a virtual frame F having a size corresponding to a region AR in order to extract the region AR. In the embodiment, the region AR is the pixel region of 2 px or more, and has a fixed size, and the frame F corresponding to the region AR also has a fixed size. This virtual frame F is scanned on the image for training P10, and a region surrounded by the frame F is extracted as the region AR.

As shown in Fig. 7B, the frame F is scanned on the image for training P10 in a direction indicated by an arrow, and a plurality of regions surrounded by the frame F are extracted as the plurality of regions AR from the entire region of the image for training P10. The frame F is scanned with a predetermined slide width. For example, in Fig. 7B, the frame F is scanned with the slide width of the frame F (one time of the frame F).

As shown in Fig. 7C, the region extraction unit 152 scans the frame F over the entire region on the image for training P10, to extract the region AR. In Fig. 7C, for example, 32 regions AR are extracted.

In this example, in a case in which the region AR is acquired from the image for training P10, the frame F is scanned starting from the left end of the first stage toward the right end, and the acquisition of the region AR of the first stage is finished. Next, the scanning is performed from the left end to the right end of the second stage, and the acquisition of the region AR of the second stage is finished. The same scanning is repeated to the final stage. In the final stage, the scanning is performed from the left end to the right side, and the acquisition of the region AR of the final stage is finished. Therefore, in the specific rule, the image for training P10 is scanned in an exhaustive order, to acquire the region AR, which is the pixel range having the fixed size, for the entire region of the image for training P10. It should be noted that the slide width for scanning the frame F can be optionally set.

The specific rule is not limited to this example, and the image for training P10 is scanned in a random order to acquire the region AR, which is the pixel range having the fixed size, for the entire region of the image for training P10. In the random order, which is different from the exhaustive order, the frame F is scanned without a particular order, to acquire the region AR, which is the pixel range having the fixed size, for the entire region of the image for training P10.

It should be noted that, in the specific rule, the region AR may be acquired not only for the entire region of the image for training P10 but the region AR may be also acquired for a part of the region of the image for training P10.

The number of the regions AR extracted from the image for training P10 can be increased by reducing a distance between the adjacent regions AR even in the random order or the exhaustive order. As will be described below, since a region of interest IR including the defective pixel is extracted from the region AR, the number of the extracted regions of interest IR can be increased by increasing the number of the regions AR. The distance between the adjacent regions AR may be determined in consideration of the number of the regions AR.

In step S3, it is determined whether or not each region AR includes the defective pixel corresponding to the defect. The defective pixel determination unit 153 of the CPU 120 determines whether or not the region AR includes the defective pixel corresponding to the defect D (including the defect D1 and the defect D2) (step S3). Among the regions AR, the region AR in which the defective pixel determination unit 153 determines that the defective pixel is included is set as the region of interest IR, and the region of interest IR is extracted in step S3.

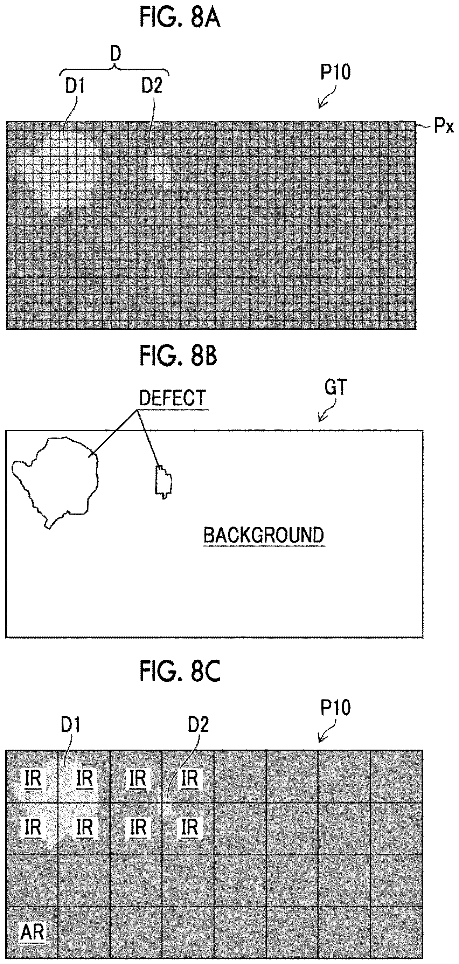

Figs. 8A to 8C are diagrams showing the defective pixel determination step (step S3). The defective pixel determination unit 153 acquires information on ground truth data GT (correct answer data) that is a reference for determining the existence or absence of the defective pixel. As shown in Fig. 8A, the information such as the positional information, the existence of the region of the defect D (the defect D1 or D2), and the type of the defect is acquired for the entire image (all the pixels) of the image for training P10 in units of one pixel (px). As shown in Fig. 8B, the ground truth data GT defines a correct answer such as the existence of the defect, the background (absence of the defect), and the type of the defect in units of pixels for each region, for the image for training P10 of Fig. 8A. The definition of the correct answer can be determined and changed in advance by the user.

Hereinafter, an example of the definition will be described. In the ground truth data GT, the types of the defects (including a scratch) are distinguished from each other and labeled. It should be noted that the distinction between the "scratch" and the "defect" may be made in advance by a label of the "scratch" or a label of the "defect". In addition, in a case in which the "scratch" is defined as the "defect" having a weak degree, the "scratch" and the "defect" may be distinguished from each other later (by referring to the detection result) depending on a size, a shape, and a distribution.

For example, in a case in which a gas defect and an occurrence cause are the same and the size is equal to or smaller than the reference, a portion corresponding to a category of "scratch" is labeled as the "gas defect" as the label. Therefore, the learning model also performs the detection in a type of "gas defect".

Examples of the type of the defect include (1) porosity (a group of minute air bubbles), (2) gas hole (gas), (3) foreign material more dense (FMMD), (4) foreign material less dense (FMLD), (5) excess metal (≈ weld reinforcement), (6) crack (fissuring), (7) saw cut (saw-like or streak-like scratch), and (8) surface damage (other scratches such as "chip" on the surface).

Examples of defects unique to the welding metal include (1) spatter, (2) undercut, (3) slag entrapment, and (4) poor melting.

The defective pixel determination unit 153 determines whether or not the plurality of regions AR acquired in step S2 shown in Fig. 8C include the defective pixels based on the ground truth data GT. In step S3, the defective pixel determination unit 153 extracts the region in which it is determined that the defective pixel that is the detection target (defect D1 or D2) is included, as the region of interest IR, as a result of determining whether or not the defective pixel corresponding to the defect is included for each pixel region from the region AR, which is the pixel region acquired in accordance with the specific rule. In Fig. 8C, four regions of interest IR including a part of the defect D1 are extracted, and four regions of interest IR including a part of the defect D2 are extracted. In step S4, the patch image IM having the patch size and including the region of interest IR is extracted as the training data TD for the region of interest IR in which the defective pixel Dp exists. The training data extraction unit 154 of the CPU 120 extracts the patch image IM having the patch size and including the region of interest IR as the training data TD for the region of interest IR including the defective pixel Dp.

Since the patch image IM having the patch size and including the region of interest IR is extracted as the training data TD, it is preferable that the distance between the adjacent regions of interest IR is equal to or smaller than the patch size. The training data can be reliably extracted from the image for training P10.

It is preferable that the size of the region of interest IR is determined based on the size of the defect or the distance between the defects. By setting the size of the region of interest IR to an appropriate size, it is possible to avoid one region of interest IR from including different defects. The imbalance in the number of extracted pieces between the defect D1 and the defect D2 can be corrected.

The size of the defect is, for example, about 100 µm or more and 15 mm or less. In this case, in a case in which a resolution of the image is 100 µm/px, the size of the region of interest IR is 192 px, and the patch size described below can be 128 px.

The distance between the defects also depends on the defect size. For example, in a case of the defect of a number of px (= several hundred µm), the minimum distance is 200 µm or more because the defects may be densely arranged at the minute intervals. The defects of the medium to large degree of several mm or more (= for example, 20 px or more) are relatively less frequently generated. Therefore, the distance between the defects is separated by 1 to 2 times (approximately 40 px) or more of a defect length (defect size).

The size of the region of interest IR can be determined based on these numerical values. These numerical values are examples and the configuration is not limited to these numerical values.

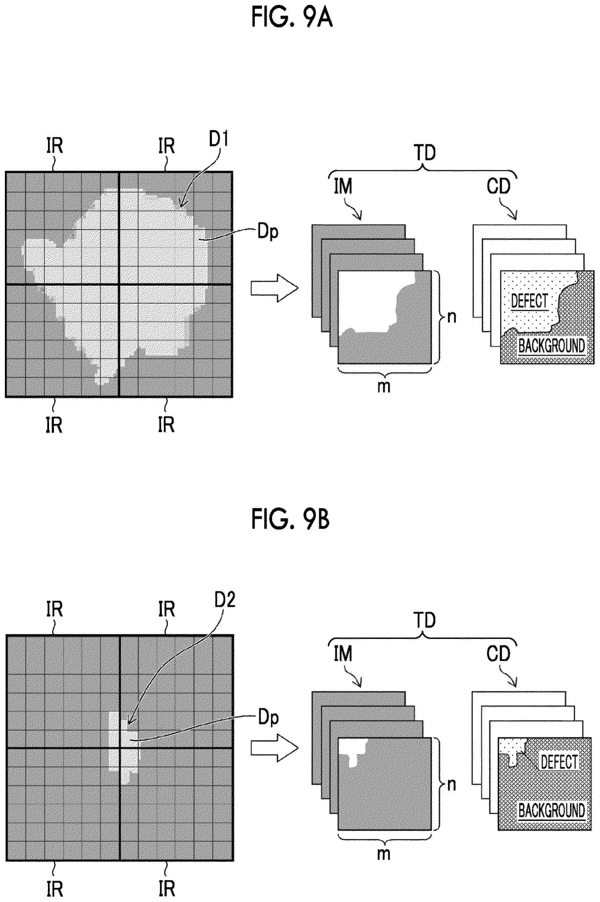

Figs. 9A and 9B are diagrams showing the training data extraction step (step S4). As shown in Fig. 9A, four regions of interest IR including the defective pixels Dp of the defect D1 having a larger size than the size of the image for training P10 are extracted. From the four regions of interest IR, the patch images IM having the patch size (m × n) and including the defective pixels Dp are extracted, and a pair of the four patch images IM and the four correct answer data CD corresponding to the four patch images IM are extracted as the training data TD.

Similarly, as shown in Fig. 9B, four regions of interest IR including the defective pixels Dp of the defect D2 are extracted from the image for training P10. From the four regions of interest IR, the patch images IM having the patch size (m × n) and including the defective pixels Dp are extracted, and a pair of the four patch images IM and the four correct answer data CD corresponding to the four patch images IM are extracted as the training data TD. In Figs. 9A and 9B, the same number (four) of the training data TD are extracted regardless of the size of the defect.

As described above, since the patch image IM having the patch size is used as the training data TD from the plurality of regions of interest IR of 2 px or more, it is possible to relax the imbalance that the number of the training data TD (the number of the learning opportunities) increases in proportion to the size of the defect D. Even a region including a minute defect is extracted as the training data TD uniformly to the same extent as a region including a large defect.

A modification example of the first embodiment will be described. In the modification example of the first embodiment, in the training data extraction step (step S4), the patch image IM having the patch size and including the defective pixel is extracted as the training data TD1, and the patch image IM having the patch size and including the pixel to be distinguished from the defect D that is the detection target is extracted as training data TD2.

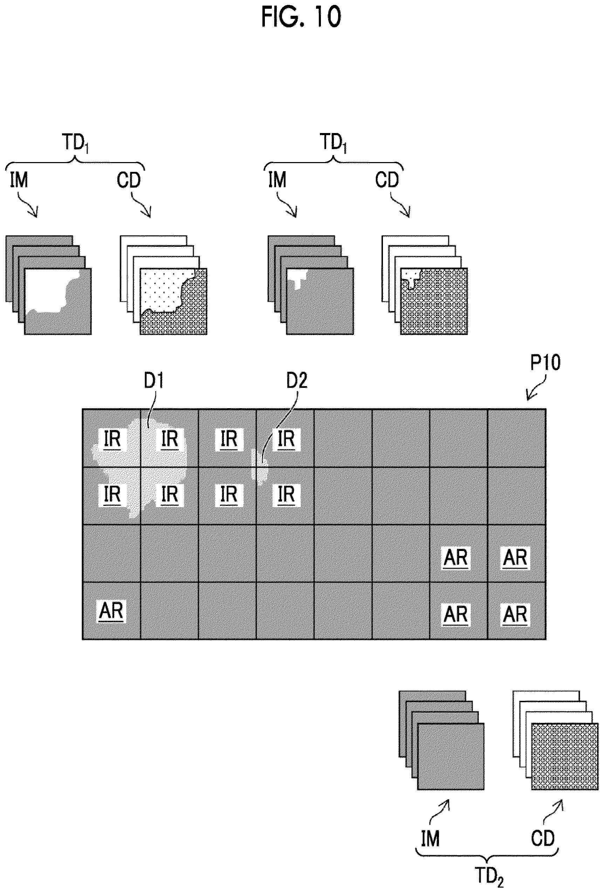

Fig. 10 is a diagram showing a modification example of the training data extraction step (step S4). As shown in Fig. 10, four regions of interest IR including the defective pixels Dp (not shown) of the defect D1 having a larger size than the size of the image for training P10 are extracted. From the four regions of interest IR for the defect D1, the patch images IM having the patch size and including the defective pixels Dp are extracted, and a pair of the four patch images IM and the four correct answer data CD corresponding to the four patch images IM are extracted as the training data TD1.

Similarly, four regions of interest IR including the defective pixels Dp of the defect D2 are extracted from the image for training P10. From the four regions of interest IR for the defect D1, the patch images IM having the patch size and including the defective pixels Dp are extracted, and a pair of the four patch images IM and the four correct answer data CD corresponding to the four patch images IM are extracted as the training data TD1.

Further, four patch images IM including pixels to be distinguished from the defect D that is the detection target, that is, pixels that do not include the defect D, are extracted from the image for training P10 as training data TD2. In Fig. 10, a pair of the four patch images IM and the four correct answer data CD corresponding to the four patch images IM is extracted as the training data TD2 from the four regions AR of the lower right of the image for training P10, which do not include the defect D. As a result, a so-called "normal region" that does not include the defect D in the image for training P10 can be used as the training data.

### <Second embodiment>

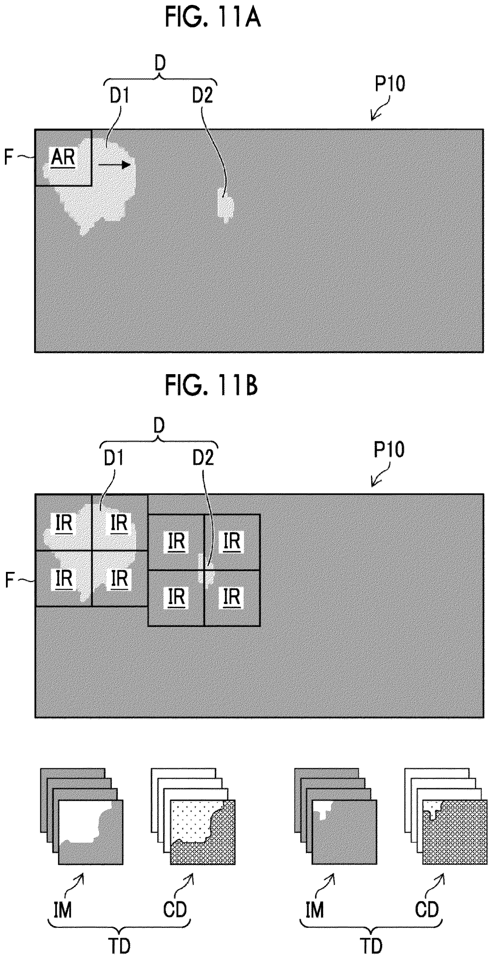

Hereinafter, the extraction of the region of interest IR and the extraction of the training data TD according to a second embodiment will be described. Figs. 11A and 11B are diagrams showing the region extraction step (step S2), the defective pixel determination step (step S3), and the training data extraction step (step S4) according to another aspect. In the extraction of the region of interest IR in Figs. 11A and 11B, one test target including the pixel that is the detection target, here, the defect D1 or the defect D2 is specified as one test target, a certain number of one pixel region including the pixel that is the detection target is acquired, and the region of interest IR is detected.

Since a certain number of the regions of interest IR are extracted from one test target and the training data TD is extracted from the regions of interest IR, a certain number of the training data TD including the detection target can be extracted from one test target. Therefore, as a result, the training data TD can be equally extracted for the region including the minute defect D2 and the region including the other large defect D1.

In Fig. 11A, similarly to Fig. 7A, the region extraction unit 152 sets the virtual frame F in order to extract the region AR from the image for training P10, and extracts the region surrounded by the frame F as the region AR.

As shown in Fig. 11B, in the extraction of the region of interest IR, for example, the defect D 1 is divided into four parts by the vertical and horizontal lines passing through the centroid coordinates of the defect D1 such that the defect D1 includes the pixel region of the defect D1 that is the detection target, and four regions of interest IR are extracted. Similarly, the defect D2 is divided into four parts by the vertical and horizontal lines in which the defect D2 that is the detection target passes through the centroid coordinates, and four regions of interest IR are extracted.

In the second embodiment, the defect D1 or the defect D2 is specified as one test target in a continuous region. As the method of extracting the continuous region of the defect D from the ground truth data GT, for example, the continuous region can be extracted from a moment of a figure using an external open source library, and the centroid can be further estimated. In a case in which a simple appearance of the "center point" may be used, a circumscribed rectangle can be obtained, and the center coordinates thereof can be used. It should be noted that the method of obtaining the centroid position is not limited to these methods.

Next, in the training data extraction step (step S4), the patch image IM having the patch size is extracted such that the defective pixel Dp existing in each of the four regions of interest IR obtained by dividing the defect D into four parts is included, so that four training data TD can be extracted from each defect D (defects D 1 and D2). Therefore, the same number of the training data TD are extracted for the region including the minute defect and the region including the other large defect. In a case in which this training data TD is used, the learning accuracy of the machine learning device 140 can be improved.

### <Third embodiment>

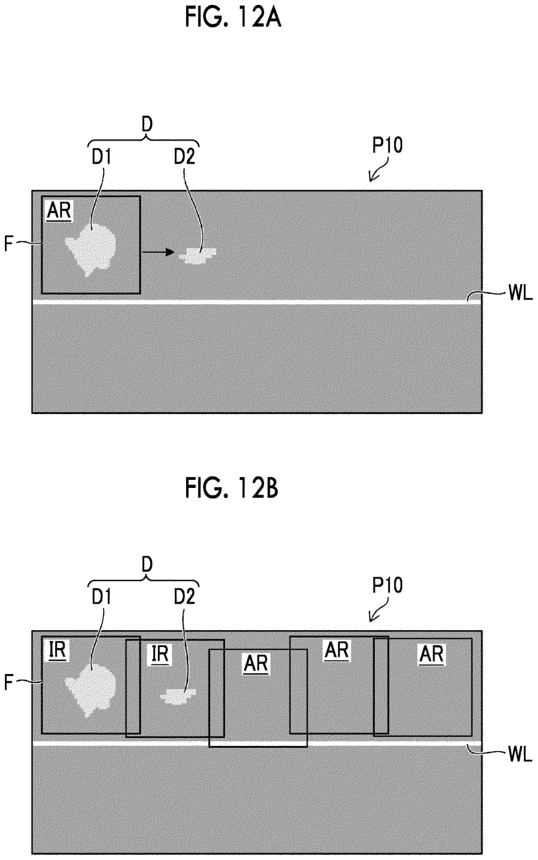

Hereinafter, the extraction of the region of interest IR and the extraction of the training data TD (not shown) according to the third embodiment will be described. Figs. 12A and 12B are diagrams showing the region extraction step (step S2) and the defective pixel determination step (step S3). In the extraction of the plurality of regions of interest IR in Figs. 12A and 12B, only a specific region is extracted from the image for training P10 as the region of interest IR, and the training data TD (not shown) is extracted from the region of interest IR.

In Fig. 12A, similarly to Fig. 7A, the region extraction unit 152 sets the virtual frame F in order to extract the region AR from the image for training P10, and extracts the region surrounded by the frame F as the region AR. The image for training P10 shows a case in which the detection of the defect generated on a welding line WL is learned.

In this case, it is known in advance that the defects that are the detection targets are distributed along the welding line WL in a one-dimensional manner. Therefore, it is not necessary to extract the outer side thereof including the region of the background, as the training data TD. On the contrary, in a case in which the region of the outer background is included, the defect that occurs outside the welding line WL and that is not tested is learned as a normal region, which may cause a decrease in accuracy, which is undesirable.

Therefore, as shown in Fig. 12B, the frame F is scanned while giving a constraint such that the frame F includes the welding line WL (straight line having a one-dimensional width in the horizontal direction) in a part thereof, and the plurality of regions AR are extracted. A range of the detection target is limited to a part of the test target image in advance, and here, the range is limited to one dimension in the horizontal direction. In this range, the frame F is scanned in a random order or an exhaustive order, to acquire the region AR that is the pixel range having a fixed size.

Next, in the defective pixel determination step (step S3), it is determined whether or not the defect D (defects D1 and D2) that is the detection target is included in the region AR, and the defect D is extracted as the region of interest IR. Next, in the training data extraction step (step S4), the training data TD not shown) can be extracted by extracting the patch image IM (not shown) having the patch size such that the defective pixel Dp existing in the region of interest IR is included. Also in this example, since the patch image having the patch size is extracted from the region of interest IR, the same number of the training data TD are extracted for the region including the minute defect and the region including the other large defect.

In addition, for example, even in a cast component having a complicated shape, the plurality of regions of interest IR are extracted such a mask that separates a range in which the subject is imaged from a content that is only the background is used such that the background portion, which is not captured, is not treated in an equivalent manner as the "normal region". As a result, the training data TD can be extracted from only the region in which the component exists, and the learning accuracy of the machine learning device 140 can be improved.

Hereinafter, a case will be described in which the image for training P10 includes a plurality of types of defects.

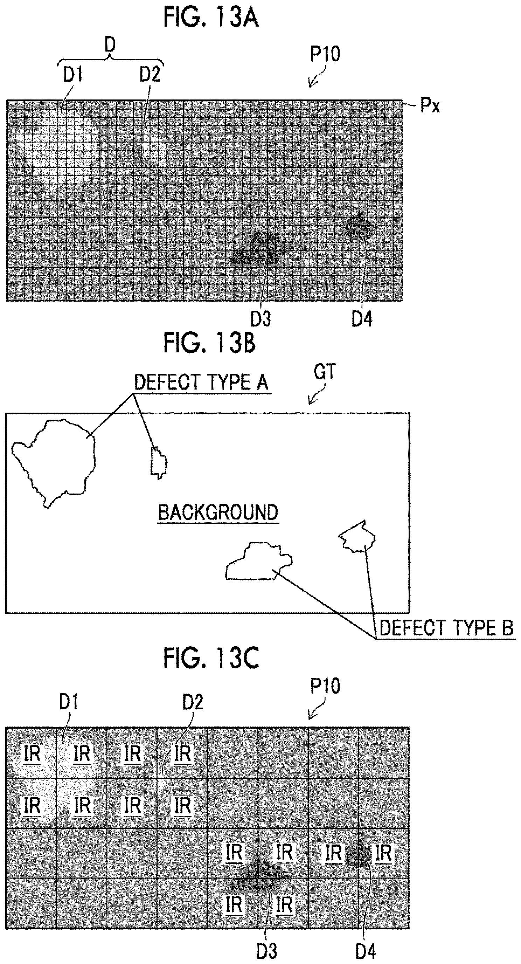

Figs. 13A to 13C are diagrams showing the defective pixel determination step (step S3) including the plurality of types of defects. As shown in Fig. 13A, the image for training P10 includes four defects D1, D2, D3, and D4. The defects D1 and D2 are defects classified into the same type, and have different sizes. The defects D3 and D4 are defects classified into the same type, and have different sizes. On the other hand, the defects D1 and D2 are defects of a different type from the defects D3 and D4. The defective pixel determination unit 153 acquires the information on the ground truth data GT (correct answer data) that is the reference for determining the presence or existence of the defective pixel.

As shown in Fig. 13A, the information such as the positional information, the existence of the region of the defect (defects D1, D2, D3, and D4), and the type of the defect is acquired for the entire image (all pixels) of the image for training P10 in units of one pixel Px. As shown in Fig. 13B, the ground truth data GT defines a correct answer such as the existence of the defect, the background (absence of the defect), and the type of the defect in units of pixels for each region, for the image for training P10 of Fig. 13A. The definition of the correct answer for each region can be defined in advance by the user. In Fig. 13B, the defects D1 and D2 are defined as a defect type A, and the defects D3 and D4 are defined as a defect type B.

In step S3, the defective pixel determination unit 153 determines whether or not the plurality of regions AR acquired in step S2 shown in Fig. 13C are included in the defective pixel based on the ground truth data GT, and the region of interest IR is extracted.

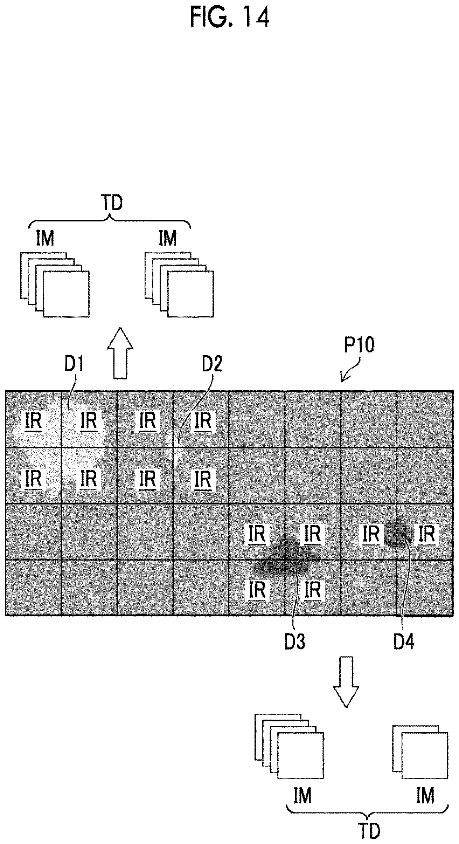

Fig. 14 is a diagram showing the training data extraction step (step S4). As shown in Fig. 14, it is determined whether or not the defective pixel is included for the plurality of the regions of interest IR, and the patch image IM having the patch size is extracted for each of the four regions of interest IR for the defect D1. For the defect D2, the patch image IM having the patch size is extracted for each of the four regions of interest IR. The four patch images IM are extracted from the defect D1 and the four patch images IM are extracted from the defect D2. For the defect D3, the patch image IM having the patch size is extracted for each of the four regions of interest IR. For the defect D4, the patch image IM having the patch size is extracted for each of the two regions of interest IR. The four patch images IM are extracted from the defect D3 and the two patch images IM are extracted from the defect D4. It should be noted that the correct answer data CD is omitted for easy understanding.

As shown in Fig. 14, eight patch images IM (four of the defect D1 and four of the defect D2) are extracted for the defect type A, and six patch images IM (four of the defect D3 and two of the defect D4) are extracted for the defect type B. The number of the patch images IM extracted from the defect type A and the defect type B having different types is different. In order to equalize the learning accuracy between the defect type A and the defect type B, it is preferable to apply the oversampling to adjust the number of the extracted training data TD to be equivalent between the types of the defects.

For example, the number of each type may be adjusted to a predetermined number. In the embodiment, the number of the training data TD extracted from the defect type A and the defect type B is 20. 12 training data TD are further extracted from the defect type A, and 14 training data TD are further extracted from the defect type B. The number of the training data TD having the defect type A and the defect type B is 20.

The number of the other types may be adjusted such that the maximum number in each type is obtained. In the embodiment, the defect type A has the number of eight training data TD. On the other hand, the defect type B has the number of six training data TD. Eight of the defect type A is the maximum number between the types. Therefore, two training data TD are further extracted from the defect type B. The number of the training data TD having the defect type A and the defect type B is eight.

The number of the extracted training data TD can be adjusted to be equal between the types, and the imbalance in the number of samples due to the type of the defect can be improved.

Hereinafter, the configurations of the defect test device 200 and an imaging system 300 shown in Fig. 1 will be described.

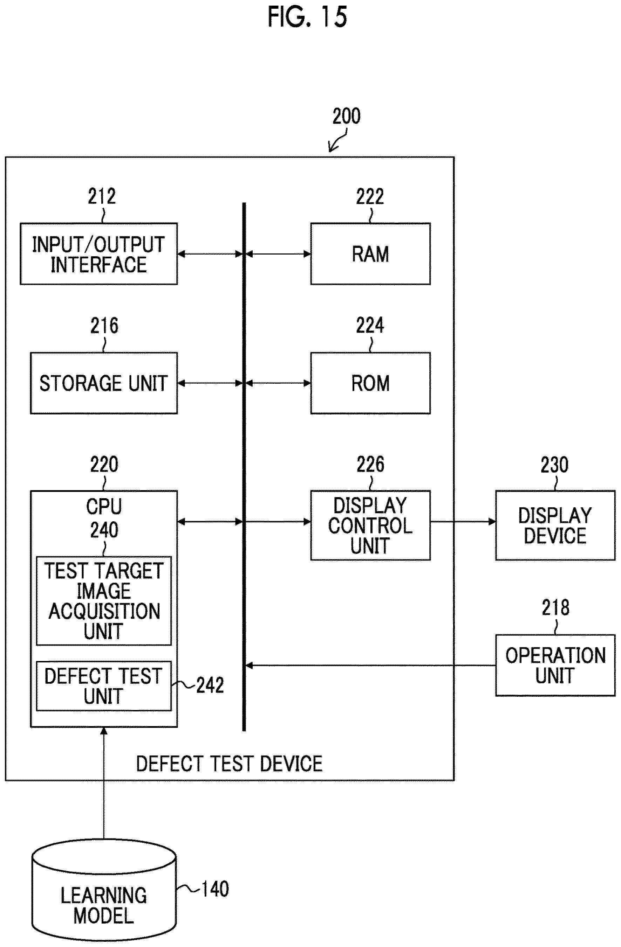

As the defect test device 200 shown in Fig. 15, a computer or a workstation can be used. The defect test device 200 according to the present example is mainly configured by an input/output interface 212, a storage unit 216, an operation unit 218, a CPU 220, a RAM 222, a ROM 224, and a display control unit 226. A display device 230 constituting a display is connected to the defect test device 200, and the display device 230 displays an image under the control of the display control unit 226 in response to a command from the CPU 220.

The input/output interface 212 can input various types of data (information) to the defect test device 200. For example, the data stored in the storage unit 216 is input via the input/output interface 212. Further, the input/output interface 212 can perform communication with an external device via the network. As the method of transmitting and receiving data between the defect test device 200 and the external device, wired communication or wireless communication (for example, a local area network (LAN), a wide area network (WAN), or the Internet connection) can be used.

The CPU (processor) 220 reads out various programs including a defect test program according to the embodiment stored in the storage unit 216, the ROM 224, or the like, and loads the programs in the RAM 222 to perform calculations, thereby integrally controlling the respective units. The CPU 220 reads out the programs stored in the storage unit 216 or the ROM 224, performs the calculations by using the RAM 222, and performs various types of processing of the defect test device 200. The CPU 220 receives an operation input from an operator via the operation unit 218, and transmits a control signal corresponding to the operation input to each unit of the defect test device 200, to control the operation of each unit.

The storage unit 216 is a memory configured by a hard disk device, an eMMC, a flash memory such as an SSD, and the like. The storage unit 216 stores the data and the programs for operating the defect test device 200, such as an operating system and a program for executing a defect test. The storage unit 216 stores information and the like used in the following embodiments.

The operation unit 218 includes a keyboard and a mouse, and the user can cause the defect test device 200 to perform necessary processing via these devices. The display device 230 also functions as an operation unit by using a touch panel type device. The display device 230 is, for example, a device such as a liquid crystal display, and can display various types of information.

The CPU 220 comprises a test target image acquisition unit 240 and a defect test unit 242. The test target image acquisition unit 240 acquires a test target image P30, which is the image of the test object OBJ captured by the imaging system 300 or the like, via the input/output interface 212. The defect test unit 242 performs the defect test on the test target image P30. The test target image P30 is acquired by the imaging system 300, which will be described below. The defect test unit 242 determines the existence or absence (defective or non-defective) and the type of the defect by using the learning model trained by the machine learning device 140 (see Fig. 4). A result of the defect test by the defect test unit 242 is displayed on the display device 230 under the control of the CPU 220. As described above, the learning model is trained by the training data TD generated by the training data generation device 100. The learning model is updated depending on the situation.

Hereinafter, an example of an imaging system 300 for capturing the image of the test object OBJ will be described. Fig. 16 is a block diagram schematically showing a configuration example of the imaging system 300. The imaging system 300 is used for imaging the test object OBJ placed in an imaging room 314, and comprises an imaging control unit 302, an imaging operation unit 304, an image storage unit 306, a camera 308, and radiation sources 310 and 312.

The imaging control unit 302 includes a CPU that controls an operation of each unit of the imaging system 300. The imaging control unit 302 receives an operation input from an operator (imaging technician) via the imaging operation unit 304, and transmits a control signal corresponding to the operation input to each unit of the imaging system 300, to control the operation of each unit.

The imaging operation unit 304 includes an input device that receives the operation input from the operator. The operator can input information on the test object OBJ, input instructions with respect to the camera 308 about imaging conditions and imaging execution, input an instruction on irradiation conditions of the radiation to the radiation sources 310 and 312, input an instruction to store the test target image P30 (not shown) obtained by the imaging in the image storage unit 306, and the like via the imaging operation unit 304. Examples of the imaging condition include imaging conditions such as an exposure time, a focal length, and a stop, an imaging angle, and an imaging point. The irradiation conditions of the radiation include an irradiation start time, an irradiation duration time, an irradiation angle, an irradiation intensity, and the like. Further, the condition related to the irradiation intensity includes a tube current and a tube voltage.

The image storage unit 306 stores the test target image P30 (light-receiving image data) of the test object OBJ captured by the camera 308. Information for specifying the test object OBJ is stored in the image storage unit 306 in association with the image data. The camera 308 is configured by, for example, a method of directly converting a light-receiving sensor into a digital value by a flat panel detector (FPD) having a panel (plate-like shape) in which the light-receiving sensors are disposed in a plane (digital detector array (DDA)) to acquire the digital value, and a method of storing a signal in an imaging plate (IP) and digitizing the signal by an external reading device (computed radiography (CR)).

The camera 308, the radiation sources 310 and 312 are disposed inside the imaging room 314. The radiation sources 310 and 312 are, for example, X-ray sources, and the partition wall and the entrance and exit of the imaging room 314 between the imaging room 314 and the outside are protected from X-rays by using X-ray shielding materials (for example, lead or concrete). It should be noted that, in a case in which the test object OBJ is irradiated with visible light for imaging, it is not necessary to use the imaging room 314 subjected to the protection.

The radiation sources 310 and 312 irradiate the test object OBJ placed in the imaging room 314 with radiation in response to the instruction from the imaging control unit 302.

The camera 308 receives the radiation emitted to the test object OBJ from the radiation source 310 and reflected by the test object OBJ or the radiation emitted to the test object OBJ from the radiation source 312 and transmitted through the test object OBJ, and images the test object OBJ, in response to the instruction of the imaging execution from the imaging control unit 302. The test object OBJ is held in the imaging room 314 by a holding member (not shown) (for example, a manipulator, a mounting table, or a movable mounting table), and a distance and an angle of the test object OBJ with respect to the camera 308 and the radiation sources 310 and 312 can be adjusted. The operator can control relative positions of the test object OBJ, the camera 308, and the radiation sources 310 and 312 via the imaging control unit 302, and can image a desired location of the test object OBJ.

The radiation sources 310 and 312 finish irradiating the test object OBJ with the radiation in synchronization with the finish of the execution of the imaging via the camera 308.

In the example shown in Fig. 16, one camera 308 and two radiation sources 310 and 312 are provided, but the number of the cameras and the radiation sources is not limited to this. For example, a plurality of the cameras and a plurality of the radiation sources may be used, or one camera and one radiation source may be used. The imaging control unit 302, the imaging operation unit 304, and the image storage unit 306 can be realized using a combination of hardware and software of a computer.

The defect test device 200 may be communicably connected to the imaging system 300, or the defect test device 200 may be configured to function as the imaging control unit 302, the imaging operation unit 304, and the image storage unit 306 of the imaging system 300.

### <Example>

The average number of samples (the number of training data) was calculated before and after the application of the training data generation method according to the embodiment to the image including the defect. The average number of samples was calculated by using 261 aluminum casting images as the image for training P10 and dividing the number of samples extracted from the 261 aluminum casting images and the value by the total number of defects for each defect size. The aluminum casting image included the FMMD, the FMLD, and the Gas, which were defects having different sizes. The defect sizes were classified into "group in which defects having a large size on average exist = FMMD", "group in which defects having a small size on average exist = Gas", and "group in which defects having a size between FMMD and Gas on average exist = FMLD".

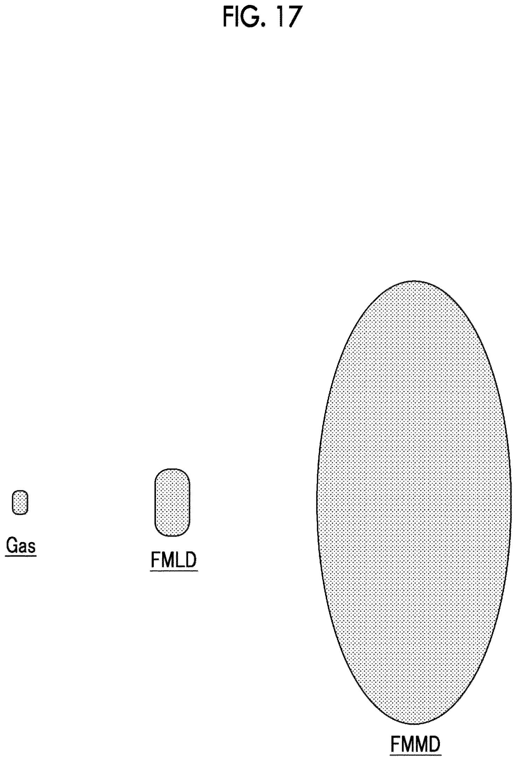

Fig. 17 is a diagram conceptually showing average sizes of the Gas, the FMLD, and the FMMD. In a case in which the length of the Gas was set to 1, the FMLD had a length of about 2 times to 6 times, and the FMMD had a length of about 30 times to 50 times. The average number of samples extracted as the training data was calculated for the FMMD, the FMLD, and the Gas before and after the application of the training data generation method according to the embodiment. Table 1 shows the results. No. 1 shows the average number of samples before application for each of the FMMD, the FMLD, and the Gas, and No. 2 shows the average number of samples after application for each of the FMMD, the FMLD, and the Gas.

**[Table 1]**

| No. | FMMD | FMLD | Gas |
|---|---|---|---|
| 1 | 174.6 | 36.4 | 21.8 |
| 2 | 3.1 | 2.3 | 3.8 |

As shown in No. 1 of Table 1, in the FMMD before the application, the sampling number of 174.6 per defect was calculated due to the influence of a small number of large defects. In the FMLD, the sampling number of 36.4 per defect was calculated. In the Gas, the sampling number of 21.8 per defect was calculated. Before the application, in a case in which the Gas was set to 1, the FMMD:FMLD:Gas was 8:1.7:1, and a large imbalance in the average number of samples was confirmed among the FMMD, the FMLD, and the Gas. It could be understood that the Gas had almost no defects of 10 px or less, while the FMLD and the FMMD were affected by a small number of large defects.

On the other hand, as shown in No. 2 of Table 1, in the FMMD after the application, the sampling number of 3.1 per defect was calculated. In the FMLD, the sampling number of 2.3 per defect was calculated. In the Gas, the sampling number of 3.8 per defect was calculated. In a case in which the Gas was set to 1, FMMD:FMLD:Gas was 0.8:0.6:1, and it was confirmed that the influence of the small number of large defects on the FMLD and the FMMD was relaxed. After the application, it could be understood that the average number of samples per defect is a desirable proportion from a defect group having a large average area and a defect group having a small average area. It is possible to equalize the learning accuracy.

### <Others>

In the embodiments, the hardware structure of the processing unit that executes various processing is the following various processors. The various processors include a central processing unit (CPU), which is a general-purpose processor that executes software (program) and functions as the various processing units, a programmable logic device (PLD), which is a processor of which a circuit configuration can be changed after manufacture, such as a field programmable gate array (FPGA), and a dedicated electric circuit, which is a processor having a circuit configuration that is designed for exclusive use in order to execute specific processing, such as an application specific integrated circuit (ASIC).

One processing unit may be configured by one of these various processors, or may be configured by two or more processors of same type or different types (for example, a plurality of FPGAs or a combination of the CPU and the FPGA). Moreover, a plurality of processing units can be configured by one processor. As a first example the configuration of the plurality of processing units by one processor, there is a form in which one processor is configured by a combination of one or more CPUs and software, and this processor functions as the plurality of processing units, as represented by a computer, such as a client or a server. Second, there is a form in which a processor, which realizes the functions of the entire system including the plurality of processing units with one integrated circuit (IC) chip, is used, as represented by a system on chip (SoC) or the like. As described above, various processing units are configured by one or more of the various processors described above, as the hardware structure.

Further, the hardware structure of these various processors is, more specifically, an electric circuit (circuitry) in which circuit elements, such as semiconductor elements, are combined.

Each configuration and function described above can be appropriately realized by any hardware, software, or a combination thereof. For example, the present invention can be applied to a program that causes a computer to execute the processing steps (processing procedure), a computer readable storage medium that stores the program (non-transitory storage medium), or a computer on which the program can be installed.

Although examples of the present invention have been described above, it goes without saying that the present invention is not limited to the above-described embodiments, and various modifications can be made without departing from the scope of the present invention.

### Explanation of References

10: defect test system
100: training data generation device
112: input/output interface
116: storage unit
118: operation unit
120: CPU
126: display control unit
130: display device
140: machine learning device
142: learning model
142A: input layer
142B: intermediate layer
142C: output layer
144: loss value calculation unit
146: parameter control unit
148: memory
151: image acquisition unit
152: region extraction unit
153: defective pixel determination unit
154: training data extraction unit
200: defect test device
212: input/output interface
216: storage unit
218: operation unit
220: CPU
226: display control unit
230: display device
240: test target image acquisition unit
242: defect test unit
300: imaging system
302: imaging control unit
304: imaging operation unit
306: image storage unit
308: camera
310: radiation source
312: radiation source
314: imaging room
A: defect type
B: defect type
AR: region
CD: correct answer data
D, D1, D2, D3, D4: defect
Dp: defective pixel
F: frame
GT: ground truth data
IM: patch image
IR: region of interest
OBJ: test object
P10: image for training
P30: test target image
Px: pixel
S1: step
S2: step
S3: step
S4: step
TD, TD1, TD2: training data
WL: welding line

## Claims

1. A training data generation device comprising:
a processor,
wherein the processor
extracts a region of 2 px or more including a defective pixel that is a detection target, as a region of interest, for a test target image including a test target, and
extracts a patch image having a patch size and including the region of interest, as training data.

2. The training data generation device according to claim 1,
wherein the region of interest
is a pixel region acquired in accordance with a specific rule, and
is a region in which it is determined that the defective pixel that is the detection target is included as a result of determining whether or not the defective pixel corresponding to a defect is included for each of the pixel regions.

3. The training data generation device according to claim 2,
wherein the specific rule is to scan the test target image in a random order or an exhaustive order and acquire a pixel range having a fixed size.

4. The training data generation device according to claim 2 or 3,
wherein, in the specific rule,
a range of the detection target is limited to a part of the test target image in advance,
scanning is performed in a random order or an exhaustive order within the range, and
a pixel range having a fixed size is acquired.

5. The training data generation device according to any one of claims 1 to 4,
wherein the processor extracts a patch image having a patch size and including a pixel to be distinguished from the detection target, as the training data, for the test target image.

6. The training data generation device according to any one of claims 1 to 5,
wherein the region of interest is determined by
specifying one detection target including a pixel of the detection target, and acquiring a certain number of pixel regions including the pixel of the detection target.

7. The training data generation device according to any one of claims 1 to 6,
wherein the patch size is a size determined by an input of a machine learning device that generates a learning model using the training data.

8. The training data generation device according to any one of claims 1 to 7,
wherein a size of the region of interest is determined based on a size of a defect of the detection target or a distance between the defects.

9. The training data generation device according to any one of claims 1 to 8,
wherein the processor determines whether or not each region of interest includes the defective pixel based on ground truth data based on the test target image.

10. The training data generation device according to any one of claims 1 to 9,
wherein a distance between the regions of interest adjacent to each other is equal to or smaller than the patch size.

11. The training data generation device according to any one of claims 1 to 10,
wherein, in a case in which the processor determines whether or not each region of interest includes the defective pixel, the processor performs the determination for each type of a defect.

12. The training data generation device according to claim 11,
wherein the processor adjusts the number of the training data for each type of the defect.

13. The training data generation device according to any one of claims 1 to 12,
wherein the test target image is an X-ray transmission image.

14. The training data generation device according to any one of claims 1 to 13,
wherein the test target image is an X-ray transmission image of a cast metal component, a forged metal component, or a welded metal component.

15. A training data generation method executed by a training data generation device including a processor, the training data generation method comprising:
a step of extracting a region of 2 px or more including a defective pixel that is a detection target, as a region of interest, for a test target image including a test target; and
a step of extracting a patch image having a patch size and including the region of interest, as training data.

16. A program causing a training data generation device including a processor to execute a training data generation method comprising:
a step of extracting a region of 2 px or more including a defective pixel that is a detection target, as a region of interest, for a test target image including a test target; and
a step of extracting a patch image having a patch size and including the region of interest, as training data.

17. A non-transitory computer-readable recording medium on which the program according to claim 16 is recorded.

18. A defect test device comprising:
the training data generation device according to any one of claims 1 to 14;
a test target image acquisition unit that acquires the test target image; and
a defect test unit that performs learning using the training data generated by the training data generation device and detects a defect in the test target image.
